# EUROPEAN PATENT SPECIFICATION

(11) **EP 0 671 359 B1**
(45) Date of publication and mention of the grant of the patent: **28.01.1998**
(21) Application number: 95301593.0
(22) Date of filing: 10.03.1995
(51) Int. Cl.: C01B 23/00, B01D 53/04, F25J 3/04

(54) **Cryogenic refrigeration method**
Kryogenisches Kühlverfahren
Procédé de réfrigération cryogénique

(30) Priority: 10.03.1994 US 209652; 14.02.1995 US 388326
(43) Date of publication of application: 13.09.1995
(73) Proprietor: THE BOC GROUP, INC., Murray Hill, New Jersey 07974 (US)
(72) Inventor: Sweeney, Paul, Basking Ridge, New Jersey (US); Prince, Colleen, North Plainfield, New Jersey 07063 (US); Owen, Andrew, Guildford, Surrey GU4 7DY (US)
(74) Representative: Wickham, Michael

(56) References cited:
- EP-A- 0 501 391
- DATABASE WPI Section Ch, Week 9420, Derwent Publications Ltd., London, GB; Class E11, AN 94-159536 & AU-A-4 753 793 (BOC GROUP INC) 14 April 1994

## Description

The present invention relates to a cryogenic refrigeration method for use in connection with a cryogenic temperature swing adsorption process to purify a vapour stream and thereby to produce a purified vapour stream. More particularly, the present invention relates to such a refrigeration method in which a heat transfer stream is liquefied by indirect heat exchange with a liquid stream to produce in turn the vapour stream to be purified and is revaporized by indirect heat exchange with the purified vapour stream.

Temperature swing adsorption processes are utilized to purify streams of a variety of gaseous mixtures. They are called "temperature swing" in that adsorption occurs at a lower temperature than desorption. If desired, the adsorption can be performed at a cryogenic temperature. For example, argon taken from an argon column of a cryogenic air separation plant can be purified by cryogenic temperature swing adsorption. Such argon typically contains unacceptable levels of oxygen and nitrogen for many applications, but particularly, for those involved in the electronics industry. In order to produce argon at the requisite purity level, a stream of argon vapour from the argon column is sent to an adsorbent bed for purification. The adsorbent bed contains stages of Zeolite molecular sieve materials that are selected preferentially to adsorb oxygen and nitrogen and thereby cleanse the argon stream of nitrogen and oxygen impurities.

In order to have continuity of production. two beds of adsorbent are operated out of phase. One of the beds, an "on-line" bed, receives the argon vapour to produce a purified argon product as a vapour stream. At the same time, the other of the beds, an "off-line" bed, is regenerated. Regeneration of the off-line bed is initiated by purging the bed with heated nitrogen. The passage of nitrogen through the bed heats the bed to initiate desorption and to remove residual oxygen from the bed. Thereafter, the continued flow of the nitrogen, which is ordinarily at ambient atmospheric temperature, cools the bed. The bed is then purged with all or part of the purified argon product from the on-line bed to remove the nitrogen. A point is reached at which all the nitrogen is removed and the argon flowing into the bed is serving to cool the off-line bed down for future service as an on-line bed. As is evident from this discussion, the flow rate of the purified product varies in that all or part of that the purified argon is contaminated with nitrogen during the purging of the off-line bed, and hence, cannot be taken as a product. Thereafter, as the bed cools, full production of the purified argon product resumes. Further, the temperature of the argo product fluctuates as a result of the argon being superheated during that part of the process in which it is used to cool the off-line adsorbent bed purified argon product has been heated by the off-line bed into a superheated state.

The purified argon product is most conveniently stored in liquid state and therefore needs to be liquefied. The liquefier needs to cope with the aforementioned fluctuations in the temperature and flow rate of the argon product. Conventionally, liquefaction of the argon product is effected through use of a nitrogen stream taken from the high pressure column of an air separation plant. However, the refrigeration demand and hence, the demand for the nitrogen stream varies with the particular phase of the temperature swing adsorption process. This in turn creates a cyclic loading on the air separation unit which is disadvantageous from both design and control standpoints.

The present invention provides a cryogenic refrigeration method that is able to cope with such fluctuation in the temperature and flow rate of the product.

According to the present invention there is provided a cryogenic refrigeration method for use with a cryogenic temperature swing adsorption process for purifying an impure vapour stream which comprises repeating a production cycle having a period in which net production of a purified vapour stream is reduced through use of part or all of the purified vapour stream to purge a regenerating adsorption bed and another period in which the purified vapour stream is superheated in cooling the purged adsorption bed, said cryogenic refrigeration method comprising:
a) at least partially liquefying a heat exchange stream by indirect heat exchange with a vaporising impure liquid stream to produce a process liquid from said heat exchange stream and said impure vapour stream from said liquid stream;
b) introducing said impure vapour stream into said cryogenic temperature swing adsorption process to produce said purified vapour stream;
c) liquefying said purified vapour stream from said cryogenic temperature swing adsorption process by indirecct heat exchange with a flow of the process liquid;
d) supplementing the flow of process liquid with a flow of supplemental liquid so as to maintain thermodynamic equilibrium between steps (a) and (c), the total mass flow rate of the process liquid and the supplemental liquid being at a maximum when said purified vapour stream is superheated; and
e) during said period in which net production of the purified vapour stream is reduced, accumulating the process liquid formed from the liquefied heat exchange stream for later use in forming the flow of the process liquid during other periods of production of the purified vapour stream.

It is to be noted, that heat leakage, irreversabilities of practical heat exchangers, and the heat of adsorption all contribute to a refrigeration deficiency which is met by the supplemental liquid.

It is to be understood that in some examples of the method according to the invention, the production of the purified product is reduced to zero, i.e. it ceases, for certain periods of time, whereas in other examples there is continuous production of product albeit at a fluctuating rate.

A major difference between the present invention and the prior art is that a liquefied stream to be purified is utilized rather than a vapour stream. If the method according to the invention is used to purify argon, the impure argon is typically taken as a liquid from the head condenser of the argon rectification column rather than as a vapour, directly from the top of the column. Additionally, the present invention takes advantage of the fact that temperature swing adsorption is not a steady-state process in that there are periods of time in which no argon product is produced or production is reduced, and, therefore, the refrigeration of the liquid to be purified can be stored and in fact accumulated by liquefying a process stream, for instance, air or nitrogen. This accumulated refrigeration can then be applied to meet the excess refrigeration requirement in liquefying the purified vapour stream when the purified vapour stream is in a superheated state. At the same time, the liquid stream to be purified by a temperature swing adsorption process is usually passed through the bed as a vapour so that utilizing a process stream to vaporize the liquid stream to be purified is essential in the first instance. To be sure, there will be a need for a flow of supplemental heat transfer fluid and this requirement can vary. However, depending on the particular application of the present invention, this requirement of supplemental heat transfer fluid can be supplied at a constant flow rate or even, if required, at a varying flow rate. In the example of the purification of crude argon separated from air by rectification, the fluctuations in the method according to the invention do not impose severe cyclic loadings on the air separation unit. This allows a cryogenic refrigeration method in accordance with the present invention to be easily integrated into a cryogenic air separation plant.

A further advantage in the present invention is its simplicity. The refrigeration requirement produced from the process liquid can be accumulated and stored in a phase separation tank. Therefore, the present invention can be effected by supplying the requisite piping and a phase separation tank. This in practice is sufficiently inexpensive that recovery and storage of the purified vapour stream in accordance with the present invention can be accomplished in a very cost effective manner.

Other preferred features of the invention are set out in Claims 2 to 8.

The invention also provides an argon purification process comprising the steps of:
a) continuously vaporising a stream of impure liquid argon by indirect heat exchange with a stream of condensing heat exchange fluid;
b) continuously separating oxygen impurity from the argon by temperature swing adsorption in which the adsorption step is performed at cryogenic temperature; and
c) reliquefying thus purified argon by indirect heat exchange with heat exchange fluid condensed in step a);
wherein during certain periods a part or all of the purified argon is not reliquefied but is used as a purge gas to regenerate adsorbent in the temperature swing adsorption, in which periods excess condensed heat exchange fluid is stored for use in other periods, and wherein said condensed heat exchange fluid is supplemented in at least some of said other periods by a supplemental heat exchange fluid.

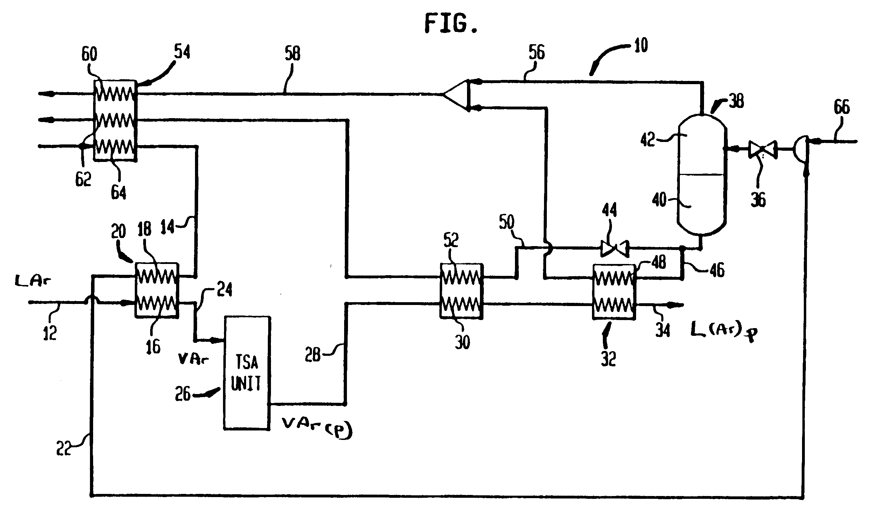

The method according to the invention will now be described by way of example with reference to the accompanying drawing, which is a schematic flow diagram of an argon purification process.

With reference to the drawing, an apparatus 10 is illustrated for carrying out a method in accordance with the present invention. For the sake of simplicity, the present invention will be discussed in relation to a cryogenic temperature swing adsorption process used in purifying a liquid argon stream produced in an argon column of a conventional three column air separation plant comprising a high pressure fractionation column, a low pressure fractionation column and an argon column. It is to be understood, however, that the present invention would have application to any cryogenic temperature swing adsorption process in which cryogenic refrigeration is required.

An impure liquid argon stream 12 containing nitrogen and oxygen impurities and a heat exchange stream 14 are introduced (both at constant flow rates) into two countercurrent passes 16 and 18 of a heat exchanger 20. Heat exchange stream 14 condenses by indirect heat exchange with the liquid argon stream thereby to produce a process liquid flowing as a process liquid stream 22 and an impure argon vapour flowing as an impure vapour stream 24. If desired, the stream 24 may contain some residual liquid. The heat exchange stream 14 can be formed of nitrogen. air or other atmospheric gas.

The impure argon vapour stream 24 is purified within a conventional temperature swing adsorption unit 26 (hereinafter referred to as "TSA unit 26") to produce a purified vapour stream 28. Purified vapour stream 28 passes through an upstream heat exchanger 30 and a downstream heat exchanger 32. By passage through these heat exchangers, the purified vapour stream is liquefied to produce a liquid product argon stream 34.

Although not illustrated, but as would be known to those skilled in the art. TSA unit 26 typically has two beds operating in an out of phase manner. Each bed has layers of CaX and 4A molecular sieve material. In the same manner as in the prior art, an on-stream bed generates an argon product stream having a reduced content of oxygen and nitrogen impurities. The off-stream bed is subjected to bed regeneration by first heating the bed with a nitrogen stream to initiate desorption and then continuing the passage of the nitrogen stream through the bed to purge residual oxygen from the bed. The bed is then cooled by nitrogen during a nitrogen cooling phase of the bed. Thereafter, the bed is purged with argon from the on-line bed. This argon upon entry to the bed is slightly superheated and is further superheated therein. During this purging phase. the argon used in purging becomes contaminated with nitrogen and hence, it no longer can be taken as a product. However, a subsequent point is reached where the nitrogen content of the argon stream being removed from the bed is free of the nitrogen and therefore has a satisfactory level of purity. Hence, there is a minimum fluctuation in the rate of production of purified vapour stream 28. It is when this minimum occurs that the refrigeration of the incoming liquid argon is stored and accumulated. The contaminated argon used in purging is discharged from TSA unit 26 through an outlet pipeline (not shown).

The process liquid stream 22 is subjected to a Joule-Thomson expansion through an expansion valve 36 and is thereby flashed into a phase separation tank 38 to separate into liquid and vapour phases 40 and 42, respectively. During a portion of the production phase of TSA unit 26, when purified vapour stream 28 is being directly taken from the on-line bed, a stream of liquid phase 40 is withdrawn from the tank 38 as a first subsidiary process liquid stream 46 and is introduced into pass 48 of heat exchanger 32 of the purified vapour stream 28. During this period a stop valve 44 in a pipeline for a second subsidiary process liquid stream 50 remains in a closed position with the result that there is no flow of such liquid.

During the off-line bed regeneration within TSA unit 26, at the point when production of purified vapour stream 28 ceases or is reduced, purified vapour is still being created in the on-line adsorbent bed. Hence, process liquid accumulates as liquid phase 40 within phase separation tank 38. When the flow rate of purified vapour stream 28 is restored again to a maximum, it is superheated as it cools the off-line bed of adsorbent. Therefore, an additional mass flow rate of process liquid is required to liquefy the superheated purified vapour stream 28. The valve 44 is opened and a second subsidiary process stream 50 through a pass 52 of upstream heat exchanger 30.

First and second subsidiary process streams 46 and 50 are vaporized within upstream and downstream heat exchangers 30 and 32 and the resultant vapour streams are passed into a further heat exchanger 54 which is employed to pre-cool the heat exchange stream 14. The streams 46 and 50 flow countercurrently to the stream 14. There is only transfer of sensible heat therebetween, i.e. no change of phase takes place although the heat exchange stream 14 is cooled to a temperature just above its liquefaction point. Optionally, a vapour phase stream 56 is taken from the tank 38 and is combined with vaporized first subsidiary process stream to form a combined stream 58 which is introduced into a pass 60 of the further heat exchanger 54. Vaporized second subsidiary process stream 50 is passed within another pass 62 of the further heat exchanger 54 and the heat exchange stream 14 is passed through countercurrent pass 64 sensible heat exchanger 54. In an integrated unit in which apparatus 10 is integrated with an air separation plant, the further heat exchanger 54 can be a part of the main heat exchanger of such air separation plant. Alternatively, a separate heat exchanger 54 can be used.

As mentioned above, the rate at which process liquid is created is not adequate to liquefy fully the impure vapour stream 28 during all periods. For this reason, a supplemental liquid stream 66 is added to the phase separation tank 38. The supplemental process liquid stream 66 has preferably the same or nearly the same composition as the heat exchange stream 14. Alternatively, it may have a different composition. The stream 66 may, if desired, be supplied discontinuously.

The following is a calculated example showing a practical operation of apparatus 10. The results of the example are for the sake of simplicity shown in chart form for the start of he three operational phases. The first phase is entitled "Adsorbing/Nitrogen Heating and Cooling Phase". During this phase, purified product stream 28 is produced from the on-line bed of TSA unit 26 while the off-line bed is being purged with nitrogen to remove oxygen and then cool the bed. The next phase, "Bed Regeneration - Argon Purge", is period of time in which the off-line bed is first being purged with part of the argon product and the last phase, "Argon Cooling" is when the argon product is cooling the off-line bed back down to cryogenic temperature and is being taken in the highly superheated state.

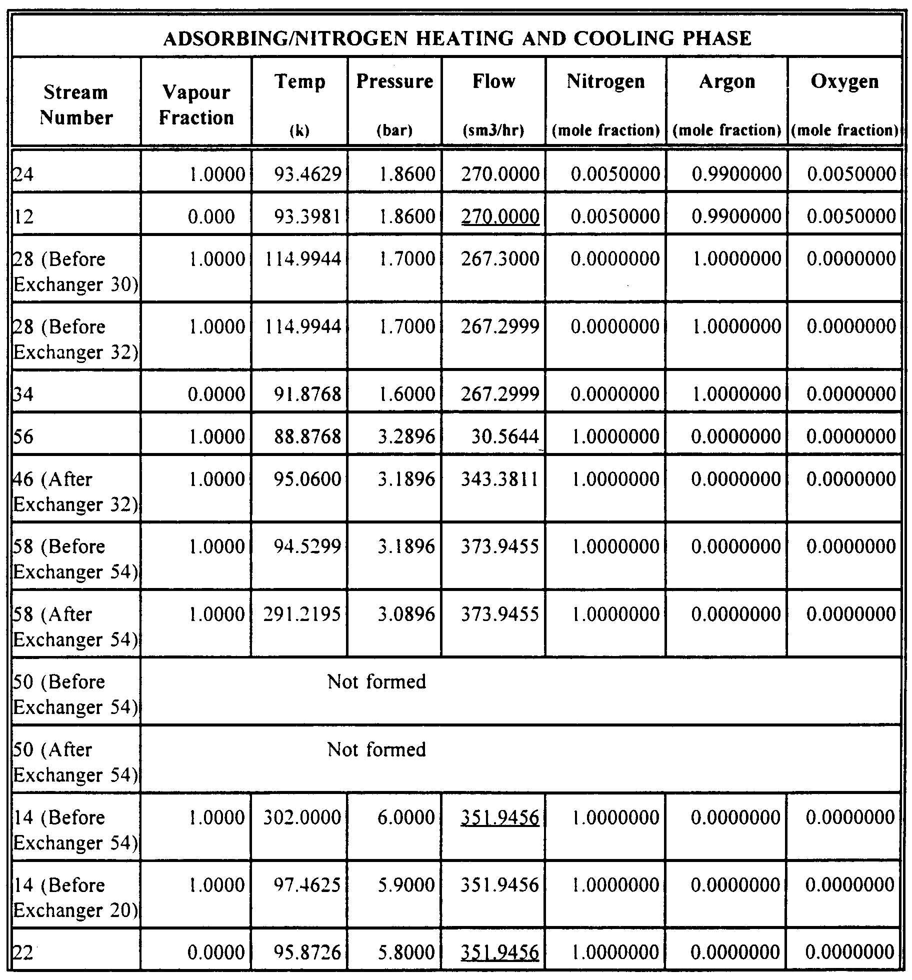

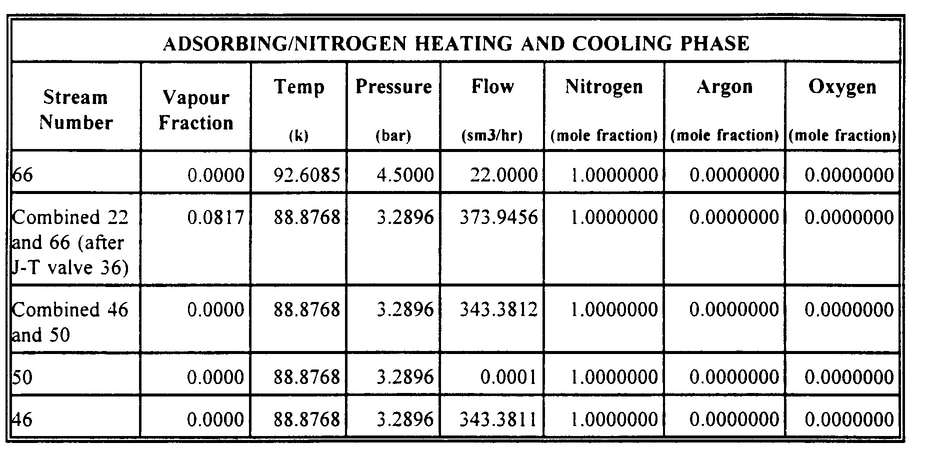

It can be seen in the foregoing chart that the mass flow rate of nitrogen being used in liquefying purified vapour stream 28 is supplied by first subsidiary stream 46 and, thus, all liquefaction occurs within downstream heat exchanger 32. The refrigeration requirement is supplemented by adding the supplemental stream 66 to phase separation tank 40. An additional point worth noting is that purified vapour stream is at a temperature of about 115K and is slightly superheated because it is taken directly from an on-line bed.

| **BED REGENERATION-ARGON PURGE** | | | | | | | |
|---|---|---|---|---|---|---|---|
| Stream Number | Vapour Fraction | Temp (k) | Pressure (bar) | Flow (sm3/hr) | Nitrogen (mole frac) | Argon (mole frac) | Oxygen (mole frac) |
| 24 | 1.0000 | 93.4631 | 1.8600 | 270.0000 | 0.0050000 | 0.9900000 | 0.0050000 |
| 12 | 0.0000 | 93.3981 | 1.8600 | 270.0000 | 0.0050000 | 0.9900000 | 0.0050000 |
| 28 (Before Exchanger 30) | 1.0000 | 114.9935 | 1.7000 | 267.3000 | 0.0000000 | 1.0000000 | 0.0000000 |
| 28 (Before Exchanger 32) | 1.0000 | 114.9935 | 1.7000 | 66.8250 | 0.0000000 | 1.0000000 | 0.0000000 |
| 34 | 0.0000 | 91.8768 | 1.6000 | 66.8250 | 0.0000000 | 1.0000000 | 0.0000000 |
| 56 | 1.0000 | 88.8768 | 3.2896 | 29.5877 | 1.0000000 | 0.0000000 | 0.0000000 |
| 46 (After Exchanger 32) | 0.6137 | 88.5249 | 3.1896 | 146.3574 | 1.0000000 | 0.0000000 | 0.0000000 |
| 58 (Before Exchanger 54) | 0.6788 | 88.5269 | 3.1896 | 175.9451 | 1.0000000 | 0.0000000 | 0.0000000 |
| 58 (After Exchanger 54) | 1.0000 | 301.3126 | 3.0896 | 175.9451 | 1.0000000 | 0.0000000 | 0.0000000 |
| 50 (Before Exchanger 54) | Not Formed | | | | | | |
| 50 (After Exchanger 54) | Not Formed | | | | | | |
| 14 (Before Exchanger 54) | 1.0000 | 302.0000 | 6.0000 | 351.9452 | 1.0000000 | 0.0000000 | 0.0000000 |
| 14 (Before Exchanger 20) | 1.0000 | 97.4627 | 5.9000 | 351.9452 | 1.0000000 | 0.0000000 | 0.0000000 |
| 22 | 0.0000 | 95.8726 | 5.8000 | 351.9452 | 1.0000000 | 0.0000000 | 0.0000000 |
| 66 | Not Supplied | | | | | | |
| 22 (After J-T Valve 36) | 0.0841 | 88.8763 | 3.2896 | 351.9452 | 1.0000000 | 0.0000000 | 0.0000000 |
| Combined 46 and 50 | 0.0000 | 88.8768 | 3.2896 | 146.3574 | 1.0000000 | 0.0000000 | 0.0000000 |
| 50 | 0.0000 | 88.8768 | 3.2896 | 0.0001 | 1.0000000 | 0.0000000 | 0.0000000 |
| 46 | 0.0000 | 88.8768 | 3.2896 | 146.3574 | 1.0000000 | 0.0000000 | 0.0000000 |

During the "Bed Regeneration - Argon Purge" phase, the flow of supplemental heat exchange stream 66 is shut off. Additionally, the flow of argon product stream 34 is reduced as is the mass flow rate of first subsidiary stream 46. This allows heat transfer liquid to accumulate within phase separation tank 40.

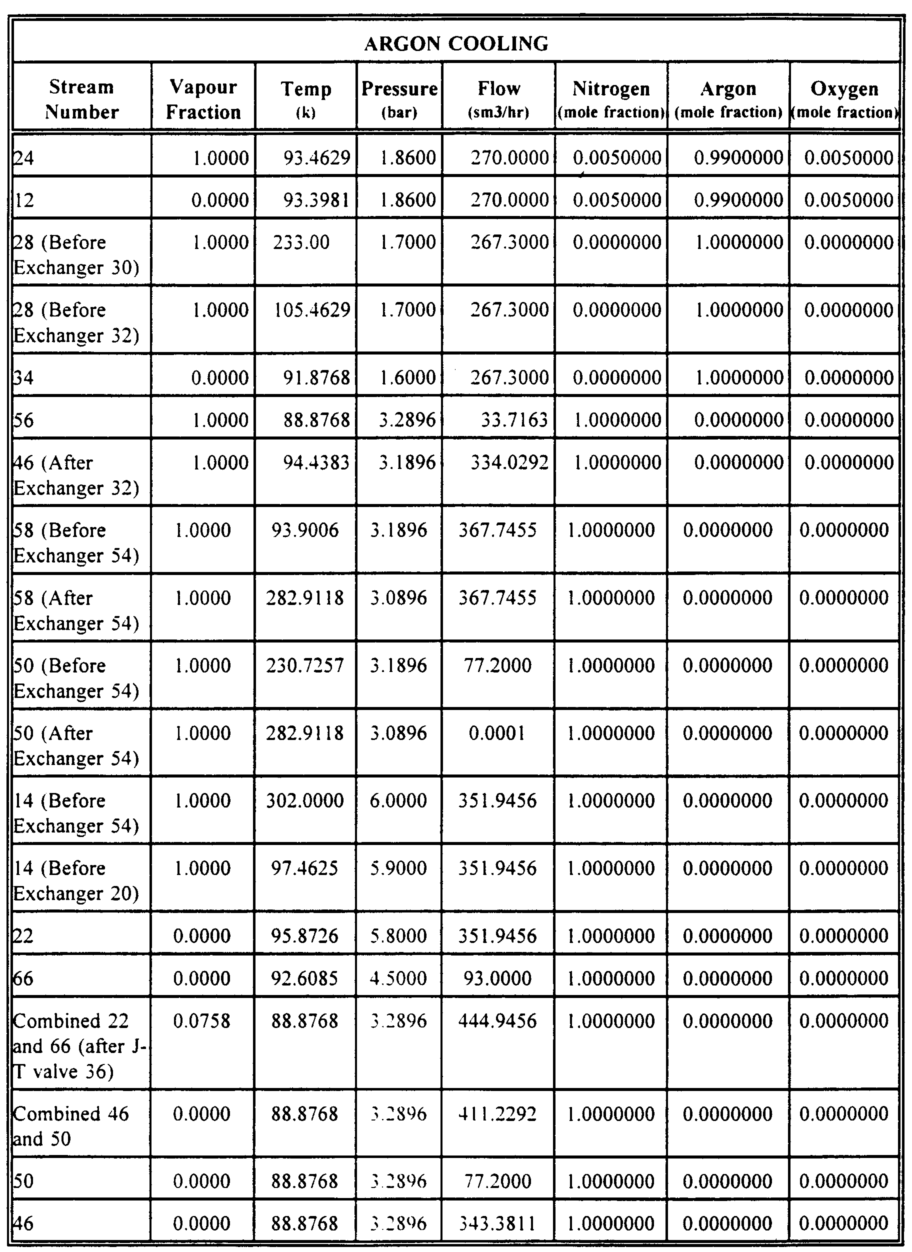

At the start of the "Argon Cooling" phase, purified vapour stream is highly superheated and has a temperature of about 233K. Also, the mass flow rate of process liquid is increased by employing both first and second subsidiary streams 46 and 50. Sensible heat is removed in upstream heat exchanger 30 and full liquefaction occurs in downstream heat exchanger 32. The mass flow rate of supplemental heat exchange stream 66 is also increased to add sufficient refrigeration to liquefy purified vapour stream 28.

## Claims

1. A cryogenic refrigeration method for use with a cryogenic temperature swing adsorption process for purifying an impure vapour stream which comprises repeating a production cycle having a period in which net production of a purified vapour stream is reduced through use of part or all of the purified vapour stream to purge a regenerating adsorption bed and another period in which the purified vapour stream is superheated in cooling the purged adsorption bed, said cryogenic refrigeration method comprising:
a) at least partially liquefying a heat exchange stream by indirect heat exchange with a vaporising impure liquid stream to produce a process liquid from said heat exchange stream and said impure vapour stream from said liquid stream;
b) introducing said impure vapour stream into said cryogenic temperature swing adsorption process to produce said purified vapour stream;
c) liquefying said purified vapour stream from said cryogenic temperature swing adsorption process by indirecct heat exchange with a flow of the process liquid;
d) supplementing the flow of process liquid in step (c) with a flow of supplemental liquid so as to maintain thermodynamic equilibrium between steps (a) and (c), the total mass flow rate of the process liquid and the supplemental liquid being at a maximum when said purified vapour stream is superheated; and
e) during said period in which net production of the purified vapour stream is reduced, accumulating the process liquid formed from the liquefied heat exchange stream for later use in forming the flow of the process liquid during other periods of production of the purified vapour stream.

2. A method as claimed in claim 1, in which said process liquid and said supplemental liquid are mixed with one another in a tank upstream of their heat exchange with the purified vapour stream.

3. A method as claimed in claim 1 or claim 2, wherein the process liquid formed from liquefaction of the heat exchange stream and the supplemental liquid have essentially the same composition.

4. A method as claimed in claim 1 or claim 2, wherein:
said heat exchange stream is subjected to a Joule-Thomson expansion and flashed into a phase separation tank to create liquid and vapour phases of said heat exchange stream;
said flow of said process liquid is removed from a bottom portion of said phase separation tank; and
said process liquid is accumulated within said phase separation tank.

5. A method as claimed in any one of the preceding claims, wherein when the total mass flow rate of said process liquid and supplemental liquid is at a maximum, a first subsidiary process stream is passed into indirect heat exchange with said purified vapour stream in a downstream heat exchanger and a second subsidiary process stream is passed into indirect heat exchange with said purified vapour stream in an upstream heat exchanger located upstream of said downstream heat exchanger so as to effect the liquefaction of the purified vapour stream.

6. A method as claimed in claim 5, wherein said first and second subsidiary process streams downstream of the liquefaction of said purified vapour stream are introduced into a further heat exchanger and brought into indirect heat exchange with said heat exchange stream so that sensible heat is removed from said heat exchange stream, upstream of the heat exchange of the heat exchange stream with said impure liquid stream.

7. A method as claimed in claim 6, wherein a vapour phase stream is removed from said phase separation tank and combined with said second subsidiary process stream upstream of said further heat exchanger

8. A method as claimed in claim 6 or claim 7, wherein said further heat exchanger is provided by the main heat exchanger of a cryogenic air separation plant.

9. A method as claimed in any one of the preceding claims, wherein said heat exchange stream is of nitrogen.

10. A method as claimed in any one of the preceding claims, wherein said heat exchange stream is of air.

11. A method as claimed in any one of the preceding claims, wherein the vapour to be purified is argon.

12. An argon purification process comprising the steps of:
a) continuously vaporising a stream of impure liquid argon by indirect heat exchange with a stream of condensing heat exchange fluid;
b) continuously separating oxygen impurity from the argon by temperature swing adsorption in which the adsorption step is performed at cryogenic temperature; and
c) reliquefying thus purified argon by indirect heat exchange with heat exchange fluid condensed in step a);
wherein during certain periods a part or all of the purified argon is not reliquefied but is used as a purge gas to regenerate adsorbent in the temperature swing adsorption, in which periods excess condensed heat exchange fluid is stored for use in other periods, and wherein said condensed heat exchange fluid is supplemented in at least some of said other periods by a supplemental heat exchange fluid.

## Patentansprüche

1. Kryogenes Kühlverfahren zur Verwendung mit einem kryogenen Temperaturwechsel-Adsorptionsprozeß zum Reinigen eines unreinen Dampfstromes, das das Wiederholen eines Erzeugungszyklus umfaßt, der eine Periode, in der die Nettoerzeugung eines gereinigten Dampfstromes dadurch reduziert ist, daß ein Teil oder der gesamte gereinigte Dampfstrom verwendet wird, um ein regenerierendes Adsorptionsbett zu spülen, und eine andere Periode aufweist, in der der gereinigte Dampfstrom beim Kühlen des gespülten Adsorptionsbettes überhitzt wird, wobei das kryogene Kühlverfahren umfaßt:
a) zumindest teilweises Verflüssigen eines Wärmeaustauschstromes durch indirekten Warmeaustausch mit einem verdampfenden unreinen Flüssigkeitsstrom, um eine Prozeßflüssigkeit aus dem Warmeaustauschstrom und den unreinen Dampfstrom aus dem Flüssigkeitsstrom zu erzeugen;
b) Einführen des unreinen Dampfstromes in den kryogenen Temperaturwechsel-Adsorptionsprozeß, um den gereinigten Dampfstrom zu erzeugen;
c) Verflüssigen des gereinigten Dampfstromes von dem kryogenen Temperaturwechsel-Adsorptionsprozeß durch indirekten Wärmeaustausch mit einer Strömung der Prozeßflüssigkeit;
d) Ergänzen der Strömung einer Prozeßflüssigkeit in Schritt (c) mit einer Strömung einer Ergänzungsflüssigkeit, um so das thermodynamische Gleichgewicht zwischen den Schritten (a) und (c) beizubehalten, wobei der Gesamtmassendurchsatz der Prozeßflüssigkeit und der Ergäzungsflüssigkeit bei einem Maximum liegt, wenn der gereinigte Dampfstrom überhitzt ist; und
e) während der Periode, in der die Nettoerzeugung des gereinigten Dampfstromes verringert ist, Ansammeln der Prozeßflüssigkeit, die aus dem verflüssigten Wärmeaustauschstrom gebildet wird, zur späteren Verwendung zum Ausbilden der Strömung der Prozeßflüssigkeit während anderer Erzeugungsperioden des gereinigten Dampfstromes.

2. Verfahren nach Anspruch 1, wobei die Prozeßflüssigkeit und die Ergänzungsflüssigkeit miteinander in einem Tank, oberstromig zu deren Wärmeaustausch mit dem gereinigten Dampfstrom, gemischt werden.

3. Verfahren nach Anspruch 1 oder Anspruch 2, wobei die Prozeßflüssigkeit, die aus der Verflüssigung des Wärmeaustauschstromes gebildet wird, und die Ergönzungsflüssigkeit im wesentlichen die gleiche Zusammensetzung aufweisen.

4. Verfahren nach Anspruch 1 oder Anspruch 2, wobei:
der Wärmeaustauschstrom einer Joule-Thomsen-Expansion unterzogen wird und in einen Phasentrennungstank entspannt wird, um Flüssigkeits- und Dampfphasen von dem Wärmeaustauschstrom zu erzeugen;
die Strömung der Prozeßflüssigkeit von einem Bodenabschnitt des Phasentrennungstankes entfernt wird;
die Prozeßflüssigkeit innerhalb des Phasentrennungstankes angesammelt wird.

5. Verfahren nach einem der vorhergehenden Ansprüche, wobei, wenn sich der Gesamtmassendurchsatz der Prozeßflüssigkeit und der Ergänzungsflüssigkeit bei einem Maximum befindet, ein erster Nebenprozeßstrom in indirekten Wärmeaustausch mit dem gereinigten Dampfstrom in einem unterstromigen Wärmeaustauscher geführt wird, und ein zweiter Nebenprozeßstrom in indirekten Wärmeaustausch mit dem gereinigten Dampfstrom in einem oberstromigen Wärmeaustauscher geführt wird, der oberstromig zu dem unterstromigen Wärmeaustauscher positioniert ist, um die Verflüssigung des gereinigten Dampfstromes zu bewirken.

6. Verfahren nach Anspruch 5, wobei die ersten und zweiten Nebenprozeßströme unterstromig der Verflüssigung des gereinigten Dampfstromes in einen weiteren Wärmeaustauscher eingeführt und in indirekten Wärmeaustausch mit dem Wärmeaustauschstrom oberstromig des Wärmeaustausches des Wärmeaustauschstromes mit dem unreinen Flüssigkeitsstrom gebracht werden, so daß freie Wärme von dem Wärmeaustauschstrom entfernt wird.

7. Verfahren nach Anspruch 6, wobei ein Dampfphasenstrom von dem Phasentrennungstank entfernt und mit dem zweiten Nebenprozeßstrom oberstromig von dem weiteren Wärmeaustauscher vereinigt wird.

8. Verfahren nach Anspruch 6 oder Anspruch 7, wobei der weitere Wärmeaustauscher durch den Hauptwärmeaustauscher einer kryogenen Luftzerlegungsanlage vorgesehen ist.

9. Verfahren nach einem der vorhergehenden Ansprüche, wobei der Wärmeaustauschstrom aus Stickstoff besteht.

10. Verfahren nach einem der vorhergehenden Ansprüche, wobei der Wärmeaustauschstrom aus Luft besteht.

11. Verfahren nach einem der vorhergehenden Ansprüche, wobei der zu reinigende Dampf Argon ist.

12. Argonreinigungsprozeß, der die Schritte umfaßt:
a) kontinuierliches Verdampfen eines Stromes aus unreinem flüssigen Argon durch indirekten Wärmeaustausch mit einem Strom aus kondensierendem Wärmeaustauschfluid;
b) kontinuierliches Trennen von Sauerstoffunreinheit von dem Argon durch Temperaturwechsel-Adsorption, wobei der Adsorptionsschritt bei kryogener Temperatur durchgeführt wird; und
c) Rückverflüssigen des somit gereinigten Argons durch indirekten Wärmeaustausch mit dem Wärmeaustauschfluid, das in Schritt a) kondensiert wird;
wobei während gewisser Perioden ein Teil oder das gesamte gereinigte Argon nicht rückverflüssigt wird, sondern als ein Spülgas verwendet wird, um das Adsorptionsmittel in der Temperaturwechsel-Adsorption zu regenerieren, wobei in den Perioden überschüssiges kondensiertes Wärmeaustauschfluid zur Verwendung in anderen Perioden gespeichert wird, und wobei das kondensierte Wärmeaustauschfluid in zumindest einigen der anderen Perioden durch ein Ergänzungswärmeaustauschfluid ergänzt wird.

## Revendications

1. Procédé de réfrigération cryogénique destiné à être utilisé avec un procédé d'adsorption par température cryogénique alternée pour épurer un flux de vapeur impure, qui comprend la répétition d'un cycle de production ayant une période pendant laquelle la production nette d'un flux de vapeur épurée est réduite par utilisation de tout ou partie du flux de vapeur épurée pour purger un lit adsorbant se régénérant et une autre période pendant laquelle le flux de vapeur épurée est surchauffé en refroidissant le lit adsorbant purgé, ledit procédé de réfrigération cryogénique comprenant :
a) la liquéfaction au moins partielle d'un flux d'échange thermique par échange indirect de chaleur avec un flux de liquide impur se vaporisant pour produire un liquide de traitement à partir dudit flux d'échange thermique et ledit flux de vapeur impure à partir dudit flux de liquide;
b) l'introduction dudit flux de vapeur impure dans ledit procédé d'adsorption par température cryogénique alternée pour produire ledit flux de vapeur épurée ;
c) la liquéfaction dudit flux de vapeur épurée venant dudit procédé d'adsorption par température cryogénique alternée par échange indirect de chaleur avec un flux du liquide de traitement;
d) l'ajout au flux de liquide de traitement dans l'étape (c) d'un flux de liquide supplémentaire afin de maintenir un équilibre thermodynamique entre les étapes (a) et (c), le débit masse total du liquide de traitement et du liquide supplémentaire atteignant un maximum lorsque ledit flux de vapeur épurée est surchauffé ; et
e) pendant ladite période pendant laquelle la production nette de vapeur épurée est réduite, l'accumulation du liquide de traitement formé à partir dudit flux d'échange thermique liquéfié pour un usage ultérieur dans la formation du flux de liquide de traitement pendant d'autres périodes de production du flux de vapeur épurée.

2. Procédé selon la Revendication 1, dans lequel ledit liquide de traitement et ledit liquide supplémentaire sont mélangés l'un à l'autre dans une cuve en amont de leur échange de chaleur avec le flux de vapeur épurée.

3. Procédé selon la Revendication 1 ou 2, dans lequel ledit liquide de traitement formé à partir de là liquéfaction du flux d'échange thermique et le liquide supplémentaire ont essentiellement la même composition.

4. Procédé selon la Revendication 1 ou 2, dans lequel :
ledit flux d'échange thermique est soumis à une détente de Joule-Thomson et projeté dans une cuve de séparation de phases pour créer des phases liquide et vapeur dudit flux d'échange thermique;
ledit flux dudit liquide de traitement est retiré d'une portion inférieure de ladite cuve de séparation de phases ; et
ledit liquide de traitement est accumulé à l'intérieur de ladite cuve de séparation de phases.

5. Procédé selon l'une quelconque des Revendications précédentes, dans lequel lorsque le débit masse total dudit liquide de traitement et dudit liquide supplémentaire est au maximum, un premier flux secondaire de traitement est envoyé en échange indirect de chaleur avec ledit flux de vapeur épurée dans un échangeur de chaleur en aval et un second flux secondaire de traitement est envoyé en échange indirect de chaleur avec ledit flux de vapeur épureé dans un échangeur de chaleur en amont situé en amont dudit échangeur de chaleur en aval, de manière à assurer la liquéfaction dudit flux de vapeur épurée.

6. Procédé selon la Revendication 5, dans lequel lesdits premier et second flux secondaires de traitement en aval de la liquéfaction dudit flux de vapeur épurée sont introduits dans un échangeur de chaleur supplémentaire et amenés en échange indirect de chaleur avec ledit flux l'échange thermique afin que la chaleur sensible soit éliminée dudit flux d'échange thermique, en amont de l'échange de chaleur du flux d'échange thermique avec ledit flux de liquide impur.

7. Procédé selon la Revendication 6, dans lequel un flux en phase vapeur est retiré de ladite cuve de séparation de phases et combiné audit second flux secondaire de traitement en amont dudit échangeur de chaleur supplémentaire.

8. Procédé selon la Revendication 6 ou la Revendication 7, dans lequel ledit échangeur de chaleur supplémentaire est fourni par l'échangeur de chaleur principal d'une installation de séparation d'air cryogénique.

9. Procédé selon l'une quelconque des Revendications précédentes, dans lequel ledit flux d'échange thermique est d'azote.

10. Procédé selon l'une quelconque des Revendications précédentes, dans lequel ledit flux d'échange thermique est d'air.

11. Procédé selon l'une quelconque des Revendications précédentes, dans lequel la vapeur à épurer est de l'argon.

12. Procédé de purification d'argon comprenant les étapes consistant à :
a) vaporiser en continu un flux d'argon liquide impur par échange indirect de chaleur avec un flux de fluide d'échange thermique se condensant;
b) séparer en continu de l'argon l'impureté que constitue l'oxygène par adsorption par température cryogénique alternée dans laquelle l'étape d'adsorption est effectuée à température cryogénique ; et
c) reliquéfier l'argon ainsi épuré par échange indirect de chaleur avec le fluide d'échange thermique condensé dans l'étape a );
dans lequel, pendant certaines périodes tout ou partie de l'argon épuré n'est pas reliquéfié mais est utilisé comme gaz de purge pour régénérer l'adsorbant dans l'adsorption par température alternée, périodes pendant lesquelles le fluide d'échange thermique condensé en excès est stocké pour une utilisation à d'autres périodes, et dans lequel ledit fluide d'échange thermique condensé est complété dans au moins certaines desdites autres périodes par un fluide d'échange thermique supplémentaire.
